# EUROPEAN PATENT SPECIFICATION

(11) **EP 1 871 779 B1**
(45) Date of publication and mention of the grant of the patent: **14.08.2013**
(21) Application number: 06749904.6
(22) Date of filing: 12.04.2006
(51) Int. Cl.: C07F 7/08, C08G 77/04

(54) **PROCESS FOR MAKING SI-H FUNCTIONAL SILOXANE OLIGOMER**
VERFAHREN ZUR HERSTELLUNG EINES SI-H-FUNKTIONELLEN SILOXANOLIGOMERS
PROCEDE DE FABRICATION D'UN OLIGOMERE DE SILOXANE A FONCTIONNALITE SI-H

(30) Priority: 20.04.2005 PL 37451905
(43) Date of publication of application: 02.01.2008
(60) Divisional application: 10012479.1
(73) Proprietor: Momentive Performance Materials Inc., Waterford, New York 12188 (US)
(72) Inventor: RUBINSZTAJN, Slawomir, Niskayuna, New York 12309 (US); FORTUNIAK, Witold, PL-94003 Lodz (PL); CHOJNOWSKI, Julian, PL-94011 Lodz (PL); KURJATA, Jan, PL-91495 Lodz (PL)
(74) Representative: Thoma, Michael
(86) International application number: PCT/US2006/013680
(87) International publication number: WO 2006/115788

(56) References cited:
- EP-A- 0 933 387
- EP-A- 1 043 015
- DE-B- 1 085 875
- US-A- 4 948 907
- US-A- 5 670 596
- DATABASE CA [Online] CHEMICAL ABSTRACTS SERVICE, COLUMBUS, OHIO, US; SARGENT, JONATHAN R. ET AL: "Telechelic 4 and 6 branch star siloxanes by acid catalyzed incorporation of D4 units into the Si-O-Si bonds of tetra(dimethylsiloxy)silane and hexa(dimethylsiloxy)cyclotrisiloxane" XP002388573 retrieved from STN Database accession no. 132:348082 & POLYMER PREPRINTS (AMERICAN CHEMICAL SOCIETY, DIVISION OF POLYMER CHEMISTRY) , 41(1), 604-605 CODEN: ACPPAY; ISSN: 0032-3934, 2000,
- DATABASE CA [Online] CHEMICAL ABSTRACTS SERVICE, COLUMBUS, OHIO, US; HAYASHI, MASAYUKI ET AL: "Preparation of 1-organoxytetrasiloxanes" XP002401181 retrieved from STN Database accession no. 142:240570 & JP 2005 047852 A2 (DOW CORNING TORAY SILICONE CO., LTD., JAPAN) 24 February 2005 (2005-02-24)
- DATABASE CA [Online] CHEMICAL ABSTRACTS SERVICE, COLUMBUS, OHIO, US; KAWAKAMI, YUSUKE ET AL: "Butadiene-functionalized poly(dimethylsiloxane) macromonomer" XP002388570 retrieved from STN Database accession no. 126:131860 & POLYMER JOURNAL (TOKYO) , 29(1), 95-99 CODEN: POLJB8; ISSN: 0032-3896, 1997,
- DATABASE CA [Online] CHEMICAL ABSTRACTS SERVICE, COLUMBUS, OHIO, US; IKEDA, KYOSHI ET AL: "Liquid crystal containing siloxane structure for ferroelectric liquid crystal composition and display" XP002388571 retrieved from STN Database accession no. 125:127914 & JP 08 113577 A2 (IDEMITSU KOSAN CO, JAPAN) 7 May 1996 (1996-05-07)
- DATABASE CA [Online] CHEMICAL ABSTRACTS SERVICE, COLUMBUS, OHIO, US; SHINTAMI, KOJI ET AL: "A facile synthesis of hydro- and vinyl-functionalized di- and tetrasiloxanes and polyaddition via hydrosilylation" XP002388572 retrieved from STN Database accession no. 126:47625 & POLYMER BULLETIN (BERLIN) , 37(6), 705-710 CODEN: POBUDR; ISSN: 0170-0839, 1996,
- DATABASE CA [Online] CHEMICAL ABSTRACTS SERVICE, COLUMBUS, OHIO, US; UCHIDA, HIROAKI ET AL: "Preparation of siloxane dendrimers" XP002401182 retrieved from STN Database accession no. 116:236379 & JP 03 263431 A2 (KAO CORP., JAPAN) 22 November 1991 (1991-11-22)

## Description

The present invention relates to a method of making Si-H functional siloxane oligomers from the reaction between a silicon hydride compound and a cyclic siloxane oligomer in the presence of a Lewis acid that is capable of interacting with the hydrogen of the silicon hydride to promote a ring opening of the cyclic siloxane oligomer thereby facilitating the insertion of a siloxane oligomer segment between Si and H atoms to form the Si-H functional siloxane oligomers.

### BACKGROUND OF THE INVENTION

Si-H functional siloxane oligomers are an important class of siloxane intermediates that have a broad range of industrial applications including, but not limited to, precursors for preparation of organofunctional siloxane oligomers, chain extenders and crosslinkers. Oligomers are generally a short chain polymer molecule consisting of only a small plurality of monomer units, e.g., dimer, trimer, and even dódecarner. Typical processes to make such Si-H functional siloxane oligomers include cohydrolysis of chlorosilanes, heterocondensation of organofunctional silanes, cationic polymerization of cyclosiloxanes in the presence of tetramethyldisiloxane as a chain stopper or by end-capping of silanol stopped oligosiloxanes with dimethylchlorosilane. Such current processes to make Si-H functional siloxane oligomers' produce siloxane oligomers with high polydispersity. To date it has been difficult to prepare mono-Si-H functional or telechelic Si-H functional siloxane oligomers or siloxane oligomers with narrow polydispersity.

Document EP-0 933 387 A1 discloses a process for the preparation of Si-H functional compounds starting from a disiloxane and a cyclotrisiloxane in an acid-catalyzed reaction.

One process to produce Si-H functional siloxane oligomers with narrow polydispersity is an anionic ring opening polymerization of hexamethylcyclotrisiloxanes and subsequent quenching of lithium silanolate with chlorodimethylsilane. However, this process is very difficult to conduct at an industrial scale.

Prior art document JP 08-113577 A2 (Ikeda, Kyoshi et al.: "Liquid Crystal Containing Siloxane Structure for Ferroelectric Liquid Crystal Composition and Display") discloses a process for preparing Si-H functional siloxane oligomers. Lewis acids in general are proposed as catalyst.

In spite of the foregoing developments, there is a continuing search for new reaction for preparing Si-H functional siloxane oligomers that will improve reaction's polydispersity.

### SUMMARY OF THE INVENTION

The present invention provides for a process as defined in claim 1. Preferred embodiments of the invention are laid down in the dependent claims.

Thus, the present invention provides for a process for making Si-H functional siloxane oligomer by a telomerization reaction. The telomerization reaction method includes providing: (a) a silicon hydride or Si-H functional siloxane, (b) a cyclic siloxane oligomer, and (c) a Lewis acid. The Lewis acid is capable of interacting with the H of the silicon hydride to promote the ring opening of the cyclic siloxane oligomer thereby facilitating the insertion of a siloxane oligomer segment between Si and H atoms to form the Si-H functional siloxane oligomer. The siloxane oligomer segment is generally a short chain polymer molecule including a small plurality of monomer units, e.g., dimer, trimer, tretramer, and even up to dodecamer.

Further, the processes for making the Si-H functional siloxane oligomers of the present invention may be used in or to provide for the production of compositions such as, for example, siloxane foams, siloxane coating, hyperbranched silicone polymers, cross-linked siloxane networks and gels as well as other silicone and siloxane molecules exemplified herein.

### DETAILED DESCRIPTION OF THE INVENTION

The present invention represents the discovery of a new type of reaction for silicon hydride bearing molecules to produce a Si-H functional siloxane oligomer.

Generally, the reaction is characterized as between a silicon hydride moiety with a cyclic siloxane oligomer compound. This reaction is a telomerization reaction.

Useful silicon hydride compounds for the present invention include but are not limited to trialkylsilanes, dialkylarylsilanes, alkyldiarylsilanes, triarylsilanes, dialkylsilanes, alkylarylsilanes, diarylsilanes, alkylsilanes, arylsilanes, and mixtures thereof, such as, for example, trimethylsilane (Me₃SiH), triethylsilane (Et₃SiH), diphenylmethylsilane (Ph₂MeSiH), phenyldimethylsilane (PhMe₂SiH), dimethylsilane (Me₂SiH₂), diethylsilane (Et₂SiH₂), diphenylsilane (Ph₂SiH₂), methylsilane (MeSiH₃), phenylsilane (PhSiH₃) and mixtures thereof. Useful siloxanes for the present invention include but are not limited to linear and/or branched alkylpolysiloxanes, arylpolysiloxanes, alkylarylpolysiloxanes, and mixtures thereof, such as, for example, 1,1,3,3-tetramethyldisiloxane (HSiMe₂OSiMe₂H) 1,1,3,3-tetraphenyldisiloxane (HSiPh₂OSiPh₂H), 1,1,5,5-tetramethyl-3,3-diphenyl-trisiloxane (HSiMe₂OSiPh₂OSiMe₂H), pentamethyldisiloxane (SiMe₃OSiMe₂H), tris(dimethylsiloxy)methylsilane (MeSi(OSiMe₂H)₃), tris(dimethylsiloxy)phenylsiiane (PhSi(OSiMe₂H)₃), tetrakis(dimethylsiloxy)silane (Si(OSiMe₂H)₄) and mixtures thereof.

Examples of cyclic siloxane oligomer compounds are for example, hexamethylcyclotrisiloxane, trimethylcyclotrisiloxane, triphenyl-trimethylcyclotrisiloxane hexaphenylcyclotrisiloxane and trimethyl-tris(trifluoropropyl)cyclotrisiloxane. Cyclic siloxane oligomers used in the process of the present invention are represented as 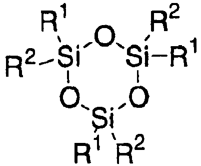 where R¹ and R² is independently selected from hydrogen, a group of one to twelve carbon atom monovalent hydrocarbon radicals, a group of one to twelve carbon atom monovalent hydrocarbon radicals substituted with one or more halogens (halogen being F, Cl, Br and I), and combinations thereof, e.g., non limiting examples being fluoroalkyl substituted or chloroalkyl substituted.

The above reactions are accomplished in the presence of a Lewis acid catalyst that is highly soluble in the reaction medium. For the purposes herein, a "Lewis acid" is any substance that will take up an electron pair to form a covalent bond (i.e., "electron-pair acceptor"), said Lewis acid being highly soluble in the reaction medium and capable of interacting with the hydrogen of the silicon hydride to promote the ring opening of the cyclic siloxane oligomer thereby facilitating the insertion of polysiloxane segment between Si and H atoms to form the Si-H functional siloxane oligomer. This concept of acidity also include
the "proton donor" concept of the Lowry-Bronsted definition of acids. A typical Lewis acid is boron trifluoride (BF₃) as it contains only six electrons in its outermost electron orbital shell. The ability of any particular Lewis acid to catalyze the new reaction of the present invention will be a function of acid strength, steric hindrance of both the acid and the substrate, chemical stability in the reaction medium and solubility of the Lewis acid and the substrate in the reaction medium. Generally the following Lewis acids: FeCl₃, AlCl₃, ZnCl₂, ZnBr₂, and BF₃ are only sparingly soluble in siloxane solvents and this low solubility tends to interfere with the ability of these particular Lewis acid catalysts to catalyze the desired reaction. Lewis acid catalysts having a greater solubility in siloxane media are more useful and include Lewis acid catalysts of Formula (I)

MR³_{X}X_{y} (I)

Wherein M is B, Al, Ga, In or Tl; each R³ is independently the same (identical) or different and represent a monovalent aromatic hydrocarbon radical having from 6 to 14 carbon atoms, such monovalent aromatic hydrocarbon radicals may have at least one electron-withdrawing element or group such as, for example, -CF₃, -NO₂ or-CN, or substituted with at least two halogen atoms; X is a halogen atom; x is 1, 2, or 3; and y is 0, 1 or 2; with the proviso that x + y =3. Particularly useful Lewis acid catalysts include Lewis acid catalysts of Formula (II)

BR³_{X}Xy (II)

wherein each R³ are independently the same (identical) or different and represent a monovalent aromatic hydrocarbon radical having from 6 to 14 carbon atoms, such monovalent aromatic hydrocarbon radicals preferably having at least one electron-withdrawing element or group such as -CF₃, -NO₂ or -CN, or substituted with at least two halogen atoms; X is a halogen atom; x is 1, 2, or 3; and y is 0, 1 or 2; with the proviso that x + y =3. To the end, applicants have been fond that B(C₆F₅)₃ is suitable catalyst.

The process of the present invention utilizes a Lewis acid catalyst concentration that ranges from about 1 part per million by weight (wppm) to about 10 weight percent (based on the total weight of siloxanes being reacted and the equals 100,000 wppm). Thus, one suitable Lewis acid catalyst concentration range is from about 10 part per million by weight (wppm) to about 5 weight percent (50,000 wppm). Another suitable Lewis acid catalyst concentration range is from about 50 wppm to about 10,000 wppm. Yet another suitable Lewis acid catalyst concentration range is from about 50 wppm to about 5,000 wppm.

The telomerization reaction can be done without solvent or in the presence of solvents. The presence of solvents may be beneficial due to an increased ability to control viscosity, rate of the reaction and exothermicity of the process. Suitable solvents include aliphatic hydrocarbons, aromatic hydrocarbons, halogenated hydrocarbons, as well as oligomeric diorganosiloxanes such as hexamethyldisiloxane and octamethylcyclotetrasiloxane.

The telomerization reaction between the (≡ Si-H) moiety and the cyclic siloxane moiety can be conducted at an ambient or at an elevated temperature depending on the chemical structures of reagents and catalysts, concentration of catalyst and used solvent.

This telomerization reaction is accomplished in the presence of a Lewis acid catalyst, such as those described herein. Applicants have been fond that B(C₆F₅)₃ is suitable catalyst. This process may occur at room temperature or at elevated temperatures. The catalyst concentration is as described previously.

The Si-H functional siloxane oligomer produced according to the method or process of this invention are useful intermediates in the field of siloxane elastomers, siloxane coatings, insulating materials and cosmetic products.

It is to be noted that silicon is a tetravalent element and for purposes of descriptive convenience herein, not all four bonds of the silicon atom have been described in some of the abbreviated chemical reaction scenarios used to explain the reaction chemistry involved in the formation of non-hydrolytic silicon oxygen bonds. Where silicon is hypovalent or hypervalent in terms of its customary stereochemistry, the full structure has been indicated.

The following is a general description of the telomerization of the reactant products of the present invention. The reaction between hydrosilanes and hexamethylcyclotrisiloxane proceeds as a complex telomerization process. Reaction of Et₃SiH proceeds slowly and eventually leads to many products because the first telomer is formed slowly and consecutive reactions of the first telomer dominates the pattern of the process.

In the case of more reactive PhMe₂SiH the reaction with hexamethylcyclotrisiloxane leads to a formation of relatively high concentration of the first telomer

PhMe₂SiH + (Me₂SiO)₃ → PhMe₂Si(OSiMe₂)₃H

The first telomer may further react with hexamethylcyclotrisiloxane giving a second telomer

PhMe₂Si(OSiMe₂)₃H + (Me₂SiO)_{3 4} → PhMe₂Si(OSiMe₂)₆H

### EXPERIMENTAL

Experimental Procedure: Reactions of the following examples were performed in a glass 10 ml reactor equipped with magnetic stirrer and a three-way glass stopcock connected to a nitrogen gas circulating system fitted with bubbler. The reactor was thermostated on a silicone oil bath. The reactor was purged with nitrogen and known amounts of substrates and gas chromatographic standard were introduced by means of tight precision Hamilton syringes using the three-way stopcock through which nitrogen was flowing. The zero sample was withdrawn by a Hamilton syringe and known amount of the solution of B(C₆F₅)₃ in toluene was introduced to reaction mixture. Samples were withdrawn at time interval and introduced to Eppendorfer vessels containing 4-ethylpyridine used for the quenching of the reaction. Time of the introduction of the sample to the amine was considered as the time of reaction. The chemical composition of the reaction mixture was established by gas chromatography analysis.

Example 1. Reaction of hexamethylcyclotrisiloxane (D₃) with PhMe₂SiH. This reaction was carried out in substantially accordance with the Experimental Procedure described above. 1.60g of D₃ was sublimed on a high vacuum line into the reactor to which 2.93g of PhMe₂SiH reagent. 0.0517 of toluene solution containing 1.01x10⁻⁴ mol of B(C₆F₅)₃ catalyst such that [B(C₆F₅)₃] was 1.87x10⁻² molkg⁻¹ solution was introduced by means of a precision Hamilton syringe. Temperature of the reaction was 24.2°C. Results are shown in Table 1.

**Table 1 - Results of Example 1**

| | Time | D₃ | D₃ | PhMe₂SiH | PhMe₂SiH | 1^{st} Telomer |
|---|---|---|---|---|---|---|
| | (s) | Rel Int | % conv | Rel Int | % conv | PhMe₂Si(OSi)₃H Rel Int |
| 1 | 0 | 3.21 | 0 | 6.92 | 0 | 0 |
| 2 | 20 | 3.12 | 3 | 6.36 | 8 | 0.064 |
| 3 | 90 | 2.78 | 13.5 | 6.15 | 11 | 0.140 |
| 4 | 210 | 2.36 | 26.5 | 6.12 | 11.5 | 0.38 |
| 5 | 360 | 1.83 | 43 | 5.72 | 17.5 | 0.64 |
| 6 | 640 | 1.18 | 63 | 5.11 | 26 | 0.92 |
| 7 | 1200 | 0.451 | 86 | 4.29 | 38 | 0.84 |
| 8 | 2400 | 0.180 | 94.5 | 3.56 | 48.5 | 0.62 |
| 9 | 5000 | 0.045 | 98.6 | 3.49 | 49.0 | 0.397 |
| 10 | 22700 | minor | >99.5 | 3.53 | 49.5 | 0.333 |
| 11 | 29500 | minor | >99.5 | 3.14 | 55 | 0.315 |

Example 2. Reaction of hexamethylcyclotrisiloxane (D₃) with PhMe₂SiH. This reaction was carried out in substantially accordance with the Experimental Procedure described above. 1.19g of D₃ was sublimed on a high vacuum line into the reactor to which 0.796g of PhMe₂SiH reagent and 2.42x10⁻² molkg⁻¹ of B(C₆F₅)₃ catalyst were added. Temperature of the reaction was 25°C. The reaction was monitored by GC and the results are shown in Table 2.

**Table 2 - Results of Example 2**

| | Time | D₃ | D₃ | PhMe₂SiH | PhMe₂SiH | 1^{st} Telomer | 2nd Telomer |
|---|---|---|---|---|---|---|---|
| | (s) | Rel Int | % conv | Rel Int | % conv | PhMe₂Si(OSi)₃H Rel Int | PhMe₂Si(OSi)₆H Rel Int |
| 1 | 0 | 3.08 | 0 | 2.53 | 0 | 0 | 0 |
| 2 | 29 | 2.86 | 7.1 | 2.13 | 15.9 | 0.041 | 0 |
| 3 | 110 | 2.67 | 13.4 | 2.02 | 20 | 0.111 | 0 |
| 4 | 200 | 2.44 | 20.6 | 1.96 | 22.4 | 0.204 | 0 |
| 5 | 320 | 2.33 | 24.4 | 1.72 | 32.1 | 0.345 | 0 |
| 6 | 540 | 1.98 | 35.8 | 1.53 | 39.5 | 0.501 | minor |
| 7 | 1200 | 1.24 | 59.7 | 1.03 | 59.4 | 0.661 | 0.092 |
| 8 | 2400 | 0.565 | 81.7 | 0.653 | 74.3 | 0.540 | 0.149 |
| 9 | 3600 | 0.235 | 92.4 | 0.522 | 79.4 | 0.312 | 0.164 |
| 10 | 6700 | 0.046 | 98.5 | 0.498 | 80.3 | 0.099 | 0.078 |
| 11 | 10800 | 0.045 | 98.5 | 0.496 | 80.4 | 0.100 | 0.079 |
| 12 | 22500 | 0.032 | 99.0 | 0.395 | 84.4 | 0.059 | 0.047 |

Example 3. Reaction of hexamethylcyclotrisiloxane (D₃) with 1,1,3,3-tetramethyldisiloxane (^{H}MM^{H}) The reaction of D₃ with ^{H}MM^{H} was performed in concentrated toluene solution using equimolar ratio of substrates and using an excess of D₃. Amounts of the specific ingredients are set forth in Table 3 for Examples 3a and 3b. The reaction was carried out in room temperature under nitrogen in a 10 ml thermostated reactor equipped with magnetic stirrer and a three way glass stopcock connected to a nitrogen gas circulating system fitted with bubbler. An amount of D₃ was sublimed on a high vacuum line into the reactor which was then filled with nitrogen gas and an amount of ^{H}MM^{H}, of ABCR(97%) purified by keeping over fresh CaH₂, dodecane and prepurified toluene were placed in the reactor by means of Hamilton syringes under positive pressure of nitrogen. An amount of the stock solution of the catalyst, B(C₆F₅)₃, in toluene was introduced by a precision Hamilton syringe. The time of the catalyst introduction was considered as the zero time of the reaction. Samples were withdrawn by means of Hamilton syringe and analyzed by gas chromatography (GC). Results for Examples 3a and 3b are found in Tables 4 and 5.

**Table 3 - Reactants composition for Examples 3a and 3b.**

| Example | D₃ | ^{H}MM^{H} | C₁₂H₂₆ | Toluene | B(C₆F₅)₃ |
|---|---|---|---|---|---|
| 3a | 2.92g | 1.73g | 0.17g | 3.03g | 1.27x10⁻³ |
| | 1.67 molkg⁻¹ | 1.64 molkg⁻¹ | 1.27 molkg⁻¹ | | molkg⁻¹ |
| 3b | 1.884g | 0.389g | 0.221g | 1.73g | 9.67x10⁻³ |
| | 1.904 molkg⁻¹ | 0.651 molkg⁻¹ | 0.292 molkg⁻¹ | | molkg⁻¹ |

**Table 4 - Results of Example 3a.**

| | Time | [D₃] | [^{H}MM^{H}] | ^{H}MDM^{H} | ^{H}MD₂M^{H} | ^{H}MD₃M^{H} | cyclics |
|---|---|---|---|---|---|---|---|
| | (s) | molkg⁻¹ | molkg⁻¹ | | | | |
| 1 | 0 | 1.635 | 1.668 | - | - | - | - |
| 2 | 26 | 0.678 | 1.454 | 0.375 | 0.197 | 0.1086 | 0.0147 |
| 3 | 52 | 0.412 | - | 0.435 | 0.241 | 0.1511 | 0.0243 |
| 4 | 102 | 0.241 | 1.319 | 0.518 | 0.292 | 0.190 | 0.0312 |
| 5 | 156 | 0.1285 | 1.180 | 0.515 | 0.304 | 0.199 | 0.0362 |
| 6 | 232 | 0.1073 | - | 0.507 | 0.309 | 0.2021 | 0.0667 |
| 7 | 317 | 0.0725 | 1.104 | 0.405 | 0.268 | 0.1907 | 0.0927 |
| 8 | 539 | 0.0527 | 0.983 | z 0.387 | 0.2775 | 0.1611 | 0.1148 |
| 9 | 800 | 0.0413 | 0.925 | 0.345 | 0.2626 | 0.1548 | 0.0156 |
| 10 | 1130 | 0.0447 | 0.899 | 0.328 | 0.2624 | 0.1310 | 0.188 |
| 11 | 3560 | 0.0281 | 0.497 | 0.1374 | 0.1964 | 0.0271 | 0.250 |
| 12 | 6200 | 0.0053 | 0.245 | 0.0053 | 0.1277 | 0.0105 | 0.276 |
| 13 | 84000 | - | - | 0.0006 | 0.0241 | - | - |

**Table 5 - Results of Example 3b.**

| | Time | [^{H}MM^{H}] | [D₃] | ^{H}MDM^{H} | ^{H}MD₂M^{H} | ^{H}MD₃M^{H} | ^{H}MD₄M^{H} | ^{H}MD₅M^{H} | ^{H}MD₆M^{H} |
|---|---|---|---|---|---|---|---|---|---|
| | (s) | molkg⁻¹ | molkg⁻¹ | | | | | | |
| 1 | 0 | 0.651 | 1.904 | - | - | - | - | - | - |
| 2 | 21 | 0.335 | 1.742 | 0.0494 | 0.0406 | 0.0415 | 0.0074 | - | - |
| 3 | 77 | 0.144 | 1.612 | 0.1188 | 0.0806 | 0.1112 | 0.0107 | - | - |
| 4 | 160 | 0.0629 | 1.547 | 0.1235 | 0.0895 | 0.1327 | 0.0160 | 0.0056 | 0.0042 . |
| 5 | 265 | 0.0288 | 1.561 | 0.1365 | 0.1081 | 0.1421 | 0.0222 | 0.0093 | 0.0072 |
| 6 | 372 | 0.0226 | 1.413 | 0.107 | 0.0964 | 0.1246 | 0.0246 | 0.0120 | 0.0096 |
| 7 | 487 | 0.0150 | 1.369 | 0.1028 | 0.1031 | 0.1144 | 0.0281 | 0.0154 | 0.0121 |
| 8 | 782 | 0.0119 | 1.358 | 0.0949 | 0.1074 | 0.0848 | 0.0332 | 0.0222 | 0.0161 |
| 9 | 1105 | 0.0099 | 1.252 | 0.0781 | 0.1028 | 0.0590 | 0.0384 | 0.0301 | 0.0185 |
| 10 | 2130 | - | 1.355 | 0.0825 | 0.1276 | 0.0170 | 0.0504 | 0.0502 | 0.0204 |
| 11 | 50000 | - | 1.252 | 0.0781 | 0.1028 | 0.059 | 0.0284 | 0.0301 | 0.0185 |

Comparative Example 4. Reaction of octamethylcyclotetrasiloxane (D₄) with PhMe₂SiH. This reaction was carried out substantially in accordance with the Experimental Procedure described above. 2.87g of D₄ and 1.31g of PhMe₂SiH were added by means of Hamilton syringes under positive pressure of nitrogen into the reactor. Subsequently, 0.0556g (2.17x10⁻² molkg⁻¹) of B(C₆F₅)₃ catalyst was added. Temperature of the reaction was 25°C. The reaction was monitored by GC. The conversions of Si-H and D₄ as well as the formation of the expected siloxane oligomers were not observed even after 20hrs.

## Claims

1. A process for making a Si-H functional siloxane oligomer, the method comprising the steps of:
a) providing a silicon hydride or Si-H functional siloxane;
b) providing a cyclic siloxane oligomer having the formula 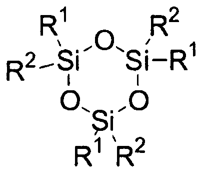 wherein R¹ and R² is independently selected from hydrogen, a group of one to twelve carbon atom monovalent hydrocarbon radicals, a group of one to twelve carbon atom monovalent hydrocarbon radicals substituted with one or more halogens, and combinations thereof; and
c) providing a Lewis acid that is highly soluble in the reaction medium and is capable of interacting with the hydrogen of the silicon hydride to promote the ring opening of the cyclic siloxane oligomer thereby facilitating the insertion of polysiloxane segment between Si and H atoms to form the Si-H functional siloxane oligomer.

2. The process of claim 1 wherein the Lewis acid catalyst comprises a compound of the formula:
BR³ₓX_{y}
wherein each R3 are independently the identical or different and represent a monovalent aromatic hydrocarbon radical having from 6 to 14 carbon atoms, such monovalent aromatic hydrocarbon radical having preferably at least one electron-withdrawing element or group, particularly -CF₃, NO₂ or -CN, or substituted with at least two halogen atoms; and
wherein X is a halogen atom; x is 1, 2 or 3; and y is 0, 1 or 2; with the proviso that x + = 3

3. The process of claim 1 wherein the silicon hydride of step (a) being selected from the group consisting of trialkylsilanes, dialkylarylsilanes, alkyldiarylsilanes, triarylsilanes, dialkylsilanes, alkylarylsilanes, diarylsilanes, alkylsilanes, arylsilanes and mixtures thereof.

4. The process of claim 1 wherein the Lewis acid catalyst comprises a compound of the formula:
MR³_{X}X_{y}
wherein M is selected from the group consisting of B, Al, Ga, In and TI; each R³ is independently selected from the group of monovalent aromatic hydrocarbon radicals having from 6 to 14 carbon atoms; X is a halogen atom selected from the group consisting of F, Cl, Br, and I; x is 1, 2, or 3; and y is 0, 1 or 2; subject to the requirement that x + y =3.

5. The process of claim 1 wherein the Lewis acid catalyst is tri(pentafluorophenyl)boron.

6. The process of claim 1 wherein the concentration of the Lewis acid catalyst ranges from 10 wppm to 50,000 wppm.

7. The process of claim 1, wherein said cyclic siloxane oligomer is selected from the group of cyclic trisiloxane oligomers.

8. The process of claim 1, wherein said cyclic siloxane oligomer is selected from the group consisting of hexamethylcyclotrisiloxane, triphenyltrimethylcyclotrisiloxane and trimethyl-tris(trifluoropropyl)cyclotrisiloxane, hexaphenylcyclotrisiloxane and trimethylcyclotrisiloxane.

9. The process of claim 1, wherein said polysiloxane segment is a trisiloxane segment.

10. The process of claim 1, wherein said process is activated by heat.

11. The process of claim 4, wherein
(a) M is boron; or
(b) each R³ is C₆F₅ and x = 3.

12. The process of claim 1 wherein said polysiloxane segment is a trisiloxane segment.

13. The process of claim 1 wherein steps (a)-(c) form a telomer and comprising the additional step of
d) Further reacting the first Si-H functional telomer of step a) with the cyclic siloxane oligomer of step (b).

14. The process of claim 1, wherein the Si-H functional siloxane comprises one or more alkyl polysiloxane, aryl polysiloxane or alkylaryl polysiloxane.

15. The process of claim 1, wherein one or both of the silicon hydride or Si-H functional siloxane comprises one or more trialkylsilane, dialkylarylsilane, alkyldiarylsilane, triarylsilane, dialkylsilane, alkylarylsilane, diarysilane, alkylsilane or arylsilane.

## Patentansprüche

1. Prozess zum Herstellen eines Si-H-funktionellen Siloxanoligomers, wobei das Verfahren folgende Schritte umfasst:
a) Vorsehen eines Siliciumhydrids oder Si-H-funktionellen Siloxans;
b) Vorsehen eines zyklischen Siloxanoligomers mit der Formel 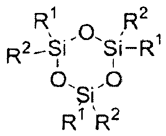 wobei R¹ und R² unabhängig aus Wasserstoff, einer Gruppe von monovalenten Kohlenwasserstoffradikalen mit ein bis zwölf Kohlenstoffatomen, einer Gruppe von monovalenten Kohlenwasserstoffradikalen mit ein bis zwölf Kohlenstoffatomen substituiert mit ein oder mehr Halogenen und Kombinationen derselben gewählt wird; und
c) Vorsehen einer Lewis-Säure, die in dem Reaktionsmedium hoch löslich ist und mit dem Wasserstoff des Siliciumhydrids wechselwirken kann, um die Ringöffnung des zyklischen Siloxanoligomers zu fördern, wodurch das Einführen eines Polysiloxansegments zwischen Si- und H-Atome zum Bilden des Si-H-funktionellen Siloxanoligomers erleichtert wird.

2. Prozess nach Anspruch 1, wobei der Lewis-Säure-Katalysator eine Verbindung der folgenden Formel umfasst:
BR³ₓX_{y}
wobei jedes R3 unabhängig identisch oder unterschiedlich ist und ein monovalentes aromatisches Kohlenwasserstoffradikal mit 6 bis 14 Kohlenstoffatomen darstellt, wobei ein solches monovalentes aromatisches Kohlenwasserstoffradikal vorzugsweise mindestens ein elektronenentziehendes Element oder eine elektronenentziehende Gruppe, insbesondere -CF₃, NO₂ oder -CN, aufweist oder mit mindestens zwei Halogenatomen substituiert ist; und
wobei X ein Halogenatom ist; x 1, 2 oder 3 ist; und y 0, 1 oder 2 ist; mit dem Vorbehalt, dass x + y = 3.

3. Prozess nach Anspruch 1, wobei das Siliciumhydrid von Schritt (a) aus der Gruppe bestehend aus Trialkylsilanen, Dialkylarylsilanen, Alkyldiarylsilanen, Triarylsilanen, Dialkylsilanen, Alkylarylsilanen, Diarylsilanen, Alkylsilanen, Arylsilanen und Mischungen derselben gewählt wird.

4. Prozess nach Anspruch 1, wobei der Lewis-Säure-Katalysator eine Verbindung der folgenden Formel umfasst:
MR³ₓX_{y}
wobei M aus der Gruppe bestehend aus B, Al, Ga, In und TI gewählt wird; jedes R³ unabhängig aus der Gruppe von monovalenten aromatischen Kohlenwasserstoffradikalen mit 6 bis 14 Kohlenstoffatomen gewählt wird; X ein Halogenatom gewählt aus der Gruppe bestehend aus F, Cl, Br und I ist; x 1, 2 oder 3 ist; und y 0, 1 oder 2 ist; vorbehaltlich der Anforderung, dass x + y = 3.

5. Prozess nach Anspruch 1, wobei der Lewis-Säure-Katalysator Tri(pentafluorphenyl)bor ist.

6. Prozess nach Anspruch 1, wobei die Konzentration des
Lewis-Säure-Katalysators von 10 Gewichtsteilen pro Million (wppm) bis 50.000 Gewichtsteilen pro Million (wppm) reicht.

7. Prozess nach Anspruch 1, wobei das zyklische Siloxanoligomer aus der Gruppe von zyklischen Trisiloxanoligomeren gewählt wird.

8. Prozess nach Anspruch 1, wobei das zyklische Siloxanoligomer aus der Gruppe bestehend aus Hexamethylcyclotrisiloxan, Triphenyltrimethylcyclotrisiloxan und Trimethyl-tris(trifluorpropyl)cyclotrisiloxan, Hexaphenylcyclotrisiloxan und Trimethylcyclotrisiloxan gewählt wird.

9. Prozess nach Anspruch 1, wobei das Polysiloxansegment ein Trisiloxansegment ist.

10. Prozess nach Anspruch 1, wobei der Prozess durch Wärme aktiviert wird.

11. Prozess nach Anspruch 4, wobei
a) M Bor ist; oder
b) jedes R³ C₆F₅ ist und x = 3.

12. Prozess nach Anspruch 1, wobei das Polysiloxansegment ein Trisiloxansegment ist.

13. Prozess nach Anspruch 1, wobei die Schritte (a)-(c) ein Telomer bilden, und der den zusätzlichen Schritt des
d) weiteren Reagierens des ersten Si-H-funktionellen Telomers von Schritt (a) mit dem zyklischen Siloxanoligomer von Schritt (b) umfasst.

14. Prozess nach Anspruch 1, wobei das Si-H-funktionelle Siloxan ein oder mehrere von Alkylpolysiloxan, Arylpolysiloxan oder Alkylarylpolysiloxan umfasst.

15. Prozess nach Anspruch 1, wobei eines oder beide von Siliciumhydrid oder Si-H-funktionellem Siloxan ein oder mehrere von Trialkylsilan, Dialkylarylsilan, Alkyldiarylsilan, Triarylsilan, Dialkylsilan, Alkylarylsilan, Diarysilan, Alkylsilan oder Arylsilan umfasst.

## Revendications

1. Procédé de fabrication d'un oligomère de siloxane à fonctionnalité Si-H, la méthode comprenant les étapes de :
a) réaliser un hydrure de silicium ou siloxane à fonctionnalité Si-H ;
b) réaliser un oligomère de siloxane cyclique ayant la formule 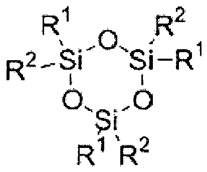 où R1 et R2 est indépendamment sélectionné parmi hydrogène, un groupe de radicaux d'hydrocarbures monovalents de un à douze atomes de carbone, un groupe de radicaux d'hydrocarbures monovalents de un à douze atomes de carbone substitués par un ou plusieurs halogènes, et leurs combinaisons ; et
c) réaliser un acide de Lewis qui est hautement soluble dans le milieu de réaction et qui est apte à interagir avec l'hydrogène de l'hydrure de silicium pour encourager l'ouverture du cycle de l'oligomère de siloxane cyclique en facilitant ainsi l'insertion du segment de polysiloxane entre les atomes Si et H pour former l'oligomère de siloxane à fonctionnalité Si-H.

2. Procédé selon la revendication 1, dans lequel le catalyseur de l'acide de Lewis comprend un composé de la formule :
BR³ₓX_{y}
où chaque R3 sont indépendamment identiques ou différents et représentent un radical d'hydrocarbures aromatique monovalent ayant de 6 à 14 atomes de carbone, un tel radical d'hydrocarbure aromatique monovalent ayant de préférence au moins un élément ou groupe de retrait d'électrons, particulièrement -CF₃, NO₂ ou -CN, ou substitué par au moins deux atomes d'halogène ; et
où X est un atome d' halogène ; x est 1, 2 ou 3 ; et Y est 0, 1 ou 2, à condition que x + y = 3.

3. Procédé selon la revendication 1, dans lequel l'hydrure de silicium de l'étape (a) est sélectionné dans le groupe consistant en trialkylsilanes, dialkylarylsilanes, alkyldiarylsilanes, triarlylsilanes, dialkylsilanes, alkylarylsilanes, diarylsilanes, alkylsilanes, arylsilanes et leurs mélanges.

4. Procédé selon la revendication 1, dans lequel le catalyseur de l'acide de Lewis comprend un composé de la formule :
MR³_{X}X_{y}
où M est sélectionné dans le groupe consistant en B, Al, Ga, In et Tel chaque R³ est indépendamment sélectionné dans le groupe de radicaux d'hydrocarbures aromatiques monovalents ayant de 6 à 14 atomes de carbone ; X est un atome d'halogène sélectionné dans le groupe consistant en F, Cl, Br et I ; x est 1, 2 ou 3 ; et y est 0, 1 ou 2, à condition que x + y = 3.

5. Procédé selon la revendication 1, dans lequel le catalyseur de l'acide de Lewis est le tri(pentafluorophényl)bore.

6. Procédé selon la revendication 1, dans lequel la concentration du catalyseur de l'acide de Lewis est dans la plage de 10 wppm à 50000 wppm.

7. Procédé selon la revendication 1, dans lequel ledit oligomère de siloxane cyclique est sélectionné dans le groupe d'oligomères de trisiloxane cycliques.

8. Procédé selon la revendication 1, dans lequel ledit oligomère de siloxane cyclique est sélectionné dans le groupe consistant en hexaméthylcyclotrisiloxane, triphényltriméthylcyclotrisiloxane et triméthyl-tris(trifluoropropyl)cyclotrisiloxane, hexaphénylcyclotrisiloxane et triméthylcyclotrisiloxane.

9. Procédé selon la revendication 1, dans lequel ledit segment de polysiloxane est un segment de trisiloxane.

10. Procédé selon la revendication 1, dans lequel ledit procédé est activé par de la chaleur.

11. Procédé selon la revendication 4, dans lequel
(a) M est bore ; ou
(b) chaque R3 est C₆F₅ et x = 3.

12. Procédé selon la revendication 1, dans lequel ledit segment de polysiloxane est un segment de trisiloxane.

13. Procédé selon la revendication 1, dans lequel les étapes (a)-(c) forment un télomère et comprenant l'étape additionnelle de
(d) faire encore réagir le premier télomère à fonctionnalité Si-H de l'étape (a) avec l'oligomère de siloxane cyclique de l'étape (b).

14. Procédé selon la revendication 1, dans lequel le siloxane à fonctionnalité Si-H comprend un ou plusieurs alkyl polysiloxane, aryl polysiloxane ou alkylaryl polysiloxane.

15. Procédé selon la revendication 1, dans lequel un ou les deux de l'hydrure de silicium ou du siloxane à fonctionnalité Si-H comprend un ou plusieurs trialkylsilane, dialkylarylsilane, alkyldiarylsilane, triarylsilane, dialkylsilane, alkylarylsilane, diarylsilane, alkylsilane ou arylsilane.
